# EUROPEAN PATENT SPECIFICATION

(11) **EP 3 907 785 B1**
(45) Date of publication and mention of the grant of the patent: **22.05.2024**
(21) Application number: 21738349.6
(22) Date of filing: 06.01.2021
(51) Int. Cl.: H01M 4/04, H01M 4/66

(54) **METAL THIN FILM FOR ELECTRODE CURRENT COLLECTOR, COMPRISING TAPING REGIONS, AND METHOD FOR MANUFACTURING ELECTRODE USING SAME**
METALLDÜNNSCHICHT FÜR EINEN ELEKTRODENSTROMABNEHMER MIT KLEBEBANDZONEN UND VERFAHREN ZUR HERSTELLUNG EINER ELEKTRODE DAMIT
FILM MINCE MÉTALLIQUE DESTINÉ À UN COLLECTEUR DE COURANT D'ÉLECTRODE, COMPRENANT DES RÉGIONS D'APPLICATION DE RUBAN, ET PROCÉDÉ CORRESPONDANT DE FABRICATION D'ÉLECTRODE

(30) Priority: 06.01.2020 KR 20200001474
(43) Date of publication of application: 10.11.2021
(73) Proprietor: LG Energy Solution, Ltd., Seoul 07335 (KR)
(72) Inventor: MIN, Ji Won, Daejeon 34122 (KR); KIM, Sun Kyu, Daejeon 34122 (KR)
(74) Representative: Plasseraud IP
(86) International application number: PCT/KR2021/000098
(87) International publication number: WO 2021/141367

(56) References cited:
- JP-A- 2010 108 608
- JP-B2- 4 518 850
- KR-A- 20050 118 579
- KR-A- 20060 027 259
- KR-B1- 100 599 691
- US-A1- 2006 008 702
- US-A1- 2014 079 992
- US-A1- 2015 303 485

## Description

### [Technical Field]

This application claims the benefit of priority based on Korean Patent Application No. 10-2020-0001474, filed on January 6, 2020.

The present invention relates to a metal thin film for an electrode current collector including a taping region and a method for manufacturing an electrode using the same.

### [Background Art]

With the increase in technology development and demand for mobile devices, the demand for secondary batteries is also rapidly increasing. Among them, lithium secondary batteries are widely used as an energy source for various electronic products as well as various mobile devices because of their high energy density and high operating voltage and excellent storage and lifetime characteristics.

In addition, the second battery has attracted attention as an energy source of an electric vehicle, a hybrid electric vehicle, etc., which are proposed as a solution for air pollution of existing gasoline vehicles and diesel vehicles using fossil fuel. In order to be applied as an energy source of an electric vehicle, a high-power battery is required.

This secondary battery is being developed as a model capable of realizing high voltage and high capacity at the request of consumers. In order to realize high capacity, an optimization process of a positive electrode material, a negative electrode material, a separator, and an electrolyte solution, which are the four major elements of a secondary battery, is required within a limited space.

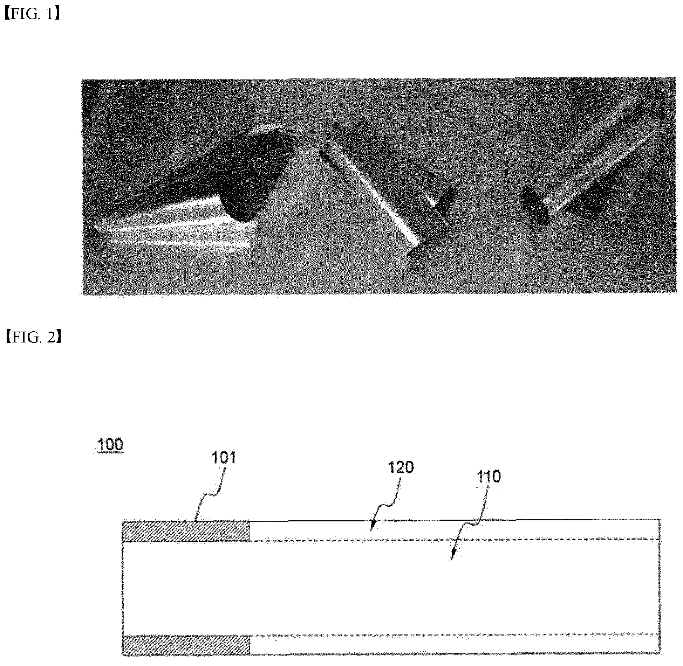

FIG. 1 is a photograph of a metal foil for a current collector, on which an electrode mixture layer has been coated, according to a conventional art. Referring to FIG. 1, the current collector, on both surfaces of which an electrode mixture layer has been formed, is subjected to a drying process after top-coating the electrode mixture layer on one surface of a copper foil, which is a metal thin film for a current collector. Thereafter, the electrode mixture layer is coated (back coating) on one surface at an opposite side of the copper foil, which is then dried through a drying process. However, when subjected to the drying process after coating an electrode mixture layer on one surface of the copper foil, the copper foil may be rolled in one direction due to the difference in the thermal expansion coefficients between the copper foil and the electrode mixture layer. In the process of applying a back coating to a copper foil, the end of the dried copper foil may be folded. The electrode mixture layer is not applied to the folded portion of the end of the copper foil, which causes electrode defects.

Therefore, there is a need for a technique capable of effectively applying the electrode mixture layer on both sides of the current metal thin film without inhibiting the process efficiency.

US 2015/303485 A1 and US 2014/079992 A1 disclose a method for manufacturing an electrode.

### [Disclosure]

### [Technical Problem]

The present invention has been created to solve the above problems, and an object of the present invention is to provide a metal thin film for an electrode current collector including a taping region, and a method for manufacturing an electrode using the same.

### [Technical Solution]

The present invention provides a method for manufacturing an electrode. In one example, a method for manufacturing an electrode as defined in the appended set of claims according to the present invention includes: a first coating step of forming a first electrode mixture layer on one surface of a metal thin film for a current collector; which has a taping region in which a tape is bonded; a first drying step of drying the metal thin film where the first electrode mixture layer has been formed; a second coating step of forming a second electrode mixture layer on an opposite surface of a surface where the first electrode mixture layer of the first dried metal thin film; and a second drying step of drying the metal thin film where the second electrode mixture layer has been formed, and a tape removing step of removing the tape in the taping region. Herein, the metal thin film for the current collector includes a taping region formed at an opposite end of the coating start point, based on a coating direction in the first coating step.

In one example, a width direction edge of the metal thin film for the current collector is a non-coated part line where an electrode mixture layer has not been formed, and the taping region is formed on the non-coated part line.

In a specific example, the taping region is formed on the non-coated part line and is formed in a range of 20 to 100 % in a width direction of the non-coated part line.

In one example, the taping region is formed in a coating direction by a certain distance from an end of the metal thin film for the current collector and is formed along a non-coated part line of the metal thin film for the current collector.

In a specific example, a length of a portion where the taping region is formed corresponds to a 3 to 30 % of a total length of the metal thin film for the current collector.

In another example, the taping region is formed on both surfaces of the metal thin film for the current collector.

In one example, in the first coating step, the first electrode mixture layer is formed on one surface of the metal thin film for the current collector from an end where the taping region has not been formed, and in the second coating step, the second electrode mixture layer is formed on an other surface of the metal thin film for the current collector from an end where the taping region has been formed.

In one example, the method for manufacturing an electrode according to the present invention further includes a step of cutting the metal thin film for the current collector according to a size of the current collector after the second drying step.

In another example, the first coating step and the first drying step are simultaneously performed, and the second coating step and the second drying step are simultaneously performed.

In a specific example, the metal thin film for the current collector is made of copper or its alloy or aluminum or its alloy.

### [Advantageous Effects]

The present invention relates to a metal thin film for an electrode current collector including a taping region, and a method for manufacturing an electrode by using the same. According to the present invention, a metal thin film can be prevented from being rolled or folded in the process of forming an electrode mixture layer on both surfaces of the metal thin film.

### [Brief Description of the Drawings]

FIG. 1 is a photograph of a conventional metal thin film for an electrode current collector formed on one surface of an electrode mixture layer.
FIG. 2 is a schematic diagram illustrating a metal thin film for an electrode current collector according to an embodiment of the present invention.
FIGS. 3 and 4 are schematic diagrams each showing a cross-sectional structure of a metal thin film for an electrode current collector according to an embodiment of the present invention.
FIG. 5 is a flowchart illustrating a method of manufacturing an electrode according to an embodiment of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

The method for manufacturing an electrode according to the present invention includes:
a first coating step of forming a first electrode mixture layer on one surface of a metal thin film for a current collector;
a first drying step of drying the metal thin film where the first electrode mixture layer has been formed;
a second coating step of forming a second electrode mixture layer on an opposite surface of a surface where the first electrode mixture layer of the first dried metal thin film; and
a second drying step of drying the metal thin film where the second electrode mixture layer has been formed.

Herein, the metal thin film for the current collector includes a taping region formed at an opposite end of the coating start point, based on a coating direction in the first coating step.

The method for manufacturing an electrode according to the present invention is applied when manufacturing an electrode having a structure where an electrode mixture layer has been formed on both surfaces of a metal thin film for a current collector. The electrode is subjected to a drying process after top-coating an electrode mixture layer on one surface of a metal thin film for a current collector, which is then again subjected to a drying process after coating the electrode mixture layer on the opposite surface of the metal thin film. However, when subjected to the drying process after coating an electrode mixture layer on one surface of the metal thin film, the metal thin film may be rolled in one direction due to the difference in the thermal expansion between the metal thin film and the electrode mixture layer. In the present invention by forming a taping region at one end of the metal thin film for the current collector, the end of the metal thin film can be prevented from being folded when a back coating is applied.

In the present invention, a "taping region" means a certain region of a metal thin film in the case that a tape is bonded to the certain region of the metal thin film which is to be a subject. The tape is not particularly limited as long as it prevents the end of the metal thin film from being rolled during the drying process, and one or more of the paper, resin, and rubber materials can be applied. For example, the tape has a structure in which an adhesive is applied to one surface of a PET (polyethylene terephthate) film.

In one example, in a metal thin film for a current collector, which has been applied to a method for manufacturing an electrode according to the present invention, a non-coated part line, where an electrode mixture layer has not been formed, is formed at the width direction edge, and a taping region is formed on the non-coated part line. In the present invention, since the taping region is formed on the non-coated part line of the metal thin film for the current collector, the taping region does not interfere with or affect the step of applying the electrode mixture layer. After forming the electrode mixture layer on the current collector and completing the drying process, the tape located in the taping region is removed.

In a specific example, the taping region is formed on the non-coated part line and is formed in a range of 20 to 100 % in a width direction of the non-coated part line. Specifically, the taping region can be formed in the range of 20 to 80%, 20 to 60%, or 30 to 75%, based on the width direction of the non-coated part line. When the taping region is formed in the range of 100% in the width direction of the non-coated part line, the width of the non-coated part line can be formed to be the same as the width of the tape to be taped. The width of the taping region is to prevent the phenomenon of the metal thin film in the drying process. When the taping region is less than 20%, it is difficult to properly prevent the metal thin film from being rolled.

In another specific example, the taping region is formed in a coating direction by a certain distance from an end of the metal thin film for the current collector and is formed along a non-coated part line of the metal thin film for the current collector. In the present invention, since the taping region is formed one the non-coated part line of the metal thin film for the current collector, the taping region does not interfere with or affect the step of applying the electrode mixture layer. In addition, the taping region is formed in the coating direction by a predetermined distance from the end of the metal thin film for the current collector. Therefore, even if the taping region is not formed on the entire region in the longitudinal direction of the metal thin film for the current collector, the phenomenon of being rolled of the metal thin film can be effectively prevented. For example, the length of a portion where the taping region is formed is in a range of 3 to 30 % or 3 to 10 % of the total length of the metal thin film for the current collector. In another example, the length of a portion where the taping region is formed is in a range of 10 to 50 cm or 15 to 30 cm.

In one example, the taping region is formed on both surfaces of the metal thin film for the current collector. As described above, when the taping region is formed on both sides of the metal thin film, there is an advantage that it is possible to more easily prevent the electrode from being rolled than when the taping region is formed on one side of the metal thin film.

Further, in the present invention, the taping region may be formed on one surface of the metal thin film for the current collector. For example, when the electrode mixture layer containing graphite is coated on one side of the copper foil and dried at 60°C, a curling phenomenon occurs so that the surface, where the electrode mixture layer is formed, is directed toward the inside. In this case, a taping region can be formed on the coating surface on which the electrode mixture layer is formed.

Further, the drying temperature after the coating of the electrode mixture layer is typically 50 to 80°C, preferably 60 to 70°C. The drying time is from 30 minutes to 3 hours, preferably from 1 to 2 hours.

In another example, in the electrode manufacturing method according to the present invention, in the first coating step, the first electrode mixture layer is formed on one surface of the metal thin film for the current collector from an end where the taping region has not been formed, and in the second coating step, the second electrode mixture layer is formed on an other surface of the metal thin film for the current collector from an end where the taping region has been formed. In the first coating step, the bending or curling phenomenon of the metal thin film has not occurred, and thus the coating step can be easily performed even in a case that a taping region has not been formed. However, in the second coating step, a coating step is performed from the end, where the taping region is formed, in order to prevent a coating defect.

In one example, the method for manufacturing an electrode according to the present invention further includes a step of cutting the metal thin film for the current collector according to a size of the current collector after the second drying step. The electrode current collector, where the formation of the electrode mixture layer has been completed, is subjected to a step of performing cutting according to the type or shape of the applied battery cell. In this case, the process of removing the tape of the taping region can be performed before the cutting step.

In one example, the metal thin film for the current collector is made of copper or its alloy or aluminum or its alloy. The battery cell contains the positive electrode and negative electrode. For example, in the positive electrode, a thin film formed of aluminum or its alloy may be applied as a current collector, and in the negative electrode, a thin film formed of copper or its alloy may be applied as a current collector.

In another example, the first coating step and the first drying step are simultaneously performed, and the second coating step and the second drying step are simultaneously performed. The process efficiency can be improved by simultaneously performing the coating and drying steps.

The present invention also provides a metal thin film for an electrode current collector applied to the above-described electrode manufacturing method. In one example, the metal thin film for an electrode current collector according to the present invention has a portion to be coated of an electrode mixture layer on a central portion based on a width direction and has a non-coated part on both edges based on the width direction wherein a tape is attached on a non-coated part of a region corresponding to 5 to 30% of a length from one end.

Specifically, the tape may be attached on both surfaces of the metal thin film for the electrode current collector, and the tape may also be attached on one surface of the metal thin film. The metal thin film for electrode current collector has already been described above.

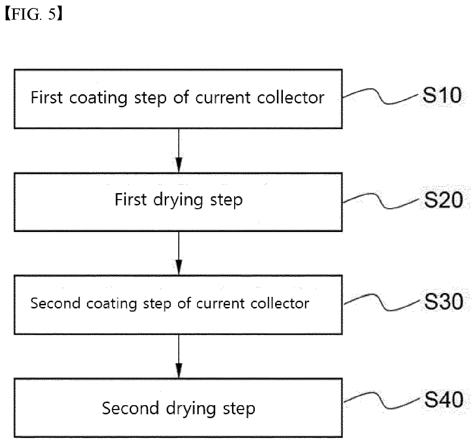

Further, FIG. 5 is a flowchart illustrating a method of manufacturing an electrode according to an embodiment of the present invention. Referring to FIG. 5, a method for manufacturing an electrode according to the present invention includes: a first coating step (S10) of forming a first electrode mixture layer on one surface of a metal thin film for a current collector; a first drying step (S20) of drying the metal thin film where the first electrode mixture layer has been formed; a second coating step (S30) of forming a second electrode mixture layer on an opposite surface of a surface where the first electrode mixture layer of the first dried metal thin film; and a second drying step (S40) of drying the metal thin film where the second electrode mixture layer has been formed. Herein, the metal thin film for the current collector includes a taping region formed at an opposite end of the coating start point, based on a coating direction in the first coating step.

Specifically, the taping region is formed on one or both surfaces of the copper foil, which is then subjected to a first coating step (S10) where a first electrode mixture layer is formed on an opposite surface of an end where the taping region has been formed, which is then subjected to a first drying step (S20) where a drying process at about 60°C for 1 hour is performed. Thereafter, the second coating step (S30) is performed from the end where the taping region is formed. In the first coating step (S10) and the second coating step (S30), the electrode mixture layer is formed on the different surfaces of the copper foil. Thereafter, the copper foil, which has been subjected to the second coating step (S30), is subjected to the second drying step (S40) in which the copper foil is dried at 60°C for 1 hour, to thereby manufacture an electrode.

Specifically, in the electrode current collector, for which a back coating, a second coating step, has been completed, a tape of the taping region is removed, and a cutting process is then additionally performed.

An electrode manufactured according to an electrode manufacturing method of the present invention is an electrode for a secondary battery. In one example, the secondary battery is a lithium secondary battery. The shape of the secondary battery is not particularly limited, and is a pouch type or has a cylindrical structure, and for example, the secondary battery is a cylindrical battery. Further, the electrode is a positive electrode or negative electrode of a secondary battery, for example, a negative electrode for a secondary battery.

The secondary battery includes an electrode assembly including a positive electrode, a negative electrode, and a separator interposed between the positive electrode and the negative electrode; a non-aqueous electrolyte solution impregnating the electrode assembly; and a battery case containing the electrode assembly and the electrolyte solution.

In the present invention, the secondary battery has a structure of including an electrode assembly including a positive electrode, a negative electrode, and a separator interposed between the positive electrode and the negative electrode; an non-aqueous electrolyte solution impregnating the electrode assembly; and a battery case containing the electrode assembly and the non-aqueous electrolyte solution. The non-aqueous electrolyte solution is, for example, an electrolyte solution containing a lithium salt.

The positive electrode has a structure in which a positive electrode active material layer is stacked on both sides of a positive electrode current collector. In one example, the positive electrode active material layer includes a positive electrode active material, a conductive material, and a binder polymer, and if necessary, may further include a positive electrode additive commonly used in the art.

The positive electrode active material may be a lithium-containing oxide, and may be the same or different. A lithium-containing transition metal oxide may be used as the lithium-containing oxide.

For example, the lithium-containing transition metal oxide may be any one or a mixture of two or more selected from the group consisting of LiₓCoO₂(0.5<x<1.3), LiₓNiO₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, 0<y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3) and LiₓFePO₄(0.5<x<1.3), and the lithium-containing transition metal oxide may be coated with a metal or metal oxide such as aluminum (Al). Further, in addition to the lithium-containing transition metal oxide, one or more of sulfide, selenide, and halide may be used.

The positive electrode active material may be included in the range of 94.0 to 98.5 wt% in the positive electrode active material layer. When the content of the positive electrode active material satisfies the above range, it is advantageous in terms of manufacturing a high-capacity battery and providing sufficient conductivity of the positive electrode or adhesion between electrode materials.

The current collector used for the positive electrode is a metal having high conductivity, and any metal which the positive electrode active material slurry may be easily attached to and which is not reactive in the voltage range of the secondary battery can be used. Specifically, non-limiting examples of the current collector for the positive electrode include aluminum, nickel, or a thin film manufactured by a combination thereof.

The positive electrode active material layer further includes a conductive material. The conductive material is usually added in an amount of 1 to 30% by weight based on the total weight of the mixture including the positive electrode active material. Such a conductive material is not particularly limited as long as it has conductivity without causing a chemical change in the secondary battery. For example, graphite such as natural graphite or artificial graphite; carbon black such as carbon black, acetylene black, ketjen black, channel black, furnace black, lamp black, or thermal black; conductive fiber such as carbon fiber or metal fiber; metal powder such as carbon fluoride, aluminum, or nickel powder; conductive whiskey such as zinc oxide or potassium titanate; conductive metal oxide such as titanium oxide; and polyphenylene derivative may be used as the conductive material.

As the binder component, a binder polymer commonly used in the art may be used without limitation. For example, various kinds of binders such as polyvinylidene fluoride-co-hexafluoropropylene (PVDF-co-HFP), polyvinylidene fluoride (PVDF), polyacrylonitrile, polymethyl methacrylate, styrene-butadiene rubber (SBR), and carboxyl methyl cellulose (CMC) may be used.

The content of the binder polymer is proportional to the content of the conductive material included in the upper positive electrode active material layer and the lower positive electrode active material layer. This is to impart adhesion to conductive materials whose particle size is relatively small compared to the active material and is because when the content of the conductive material increases, more binder polymer is required, and when the content of the conductive material decreases, less binder polymer can be used.

The negative electrode has a structure in which a negative electrode mixture layer is stacked on both sides of a negative electrode current collector. In one example, the negative electrode mixture layer includes a negative electrode active material, a conductive material, and a binder polymer, and if necessary, may further include a negative electrode additive commonly used in the art.

The negative electrode active material may include a carbon material, lithium metal, silicon or tin. When a carbon material is used as the negative electrode active material, both low crystalline carbon and high crystalline carbon may be used. Representative examples of low crystalline carbon include soft carbon and hard carbon are typical. Representative examples of high crystalline carbon include natural graphite, kish graphite, pyrolytic carbon, mesophase pitch based carbon fiber, mesocarbon microbeads, mesophase pitches, and high-temperature calcined carbons such as petroleum or coal tar pitch derived cokes.

Non-limiting examples of the current collector used for the negative electrode include copper, gold, nickel, or a thin film manufactured by a copper alloy or a combination thereof. In addition, the current collector may be used by stacking substrates made of the above materials.

In addition, the negative electrode may include a conductive material and a binder commonly used in the art.

Hereinafter, the contents of the present invention are described through examples and drawings, but the following examples are used to illustrate the present invention, and the scope of the present invention is not limited by the scope of the examples and the drawings.

### Example 1

FIG. 2 is a schematic diagram illustrating a metal thin film for an electrode current collector according to an embodiment of the present invention. Referring to FIG. 2, the metal thin film 100 for the current collector according to the present invention has a structure in which a taping region 101 formed at the opposite end of the coating start point is formed. The metal thin film 100 for the current collector of FIG. 2 performs a top coating from the right end. Copper (Cu) foil may be used as the metal thin film 100 for the current collector. The metal thin film 100 for the electrode mixture layer has a central portion which is a coated part 110 where an electrode mixture layer is formed, and a width direction edge which is a non-coated part 120 where the electrode mixture layer is not formed. The taping region 101 is formed along the line of the non-coated part 120. Specifically, the taping region 101 is formed on the line of the non-coated part 120 and is formed to have a width corresponding to the width direction of the line of the non-coated part 120. Further, the length of a portion where the taping region 101 is formed corresponds to 10% of the total length of the metal thin film 100 for the current collector.

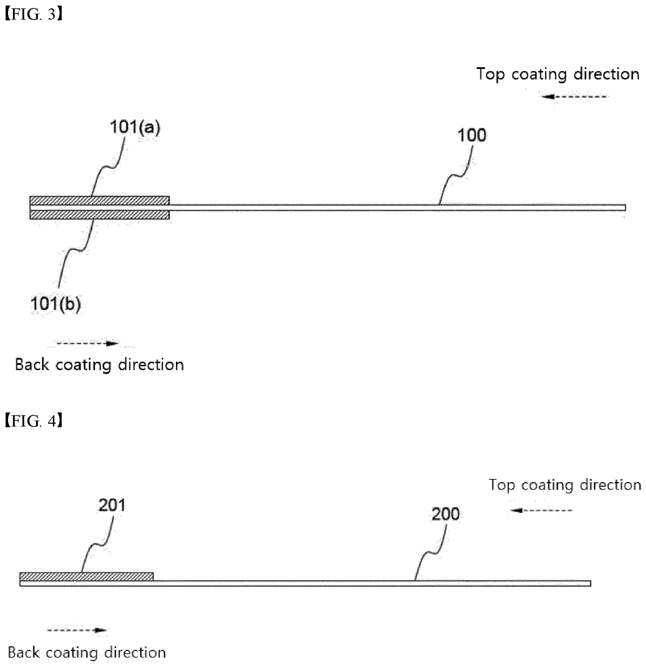

Further, FIG. 3 is a schematic diagram showing a cross-sectional structure of a metal thin film for an electrode current collector according to an embodiment of the present invention. Referring to FIG. 3, taping regions 101(a) and 101(b) are formed on both surfaces of the metal thin film 100 for the current collector. The metal thin film 100 for the current collector performs a top coating, which is a first coating step, from the top surface on the right side. After the top coating is completed, a drying process is performed at 60°C for 1 hour, and then a back coating, which is a second coating step, is performed from the left lower portion where the taping regions 101(a) and 101(b) have been formed, to thereby manufacture an electrode.

### Example 2

FIG. 4 is a schematic diagram showing a cross-sectional structure of a metal thin film for an electrode current collector according to another embodiment of the present invention. Referring to FIG. 4, a taping region 201 is formed on one surface of a metal thin film 200 for a current collector. Specifically, the taping region 201 was formed on the non-coated part line and was formed to have a width of about 50%, compared to the width direction of the non-coated part line. Further, the length of a portion where the taping region 201 is formed corresponds to 10% of the total length of the metal thin film 200 for the current collector.

Further, the metal thin film 200 for the current collector was made of aluminum (Al) foil, and a top coating, which is a first coating step, is performed from the top surface on the right side. After the top coating is completed, a drying process is performed at 60°C for 1 hour, and then a back coating, which is a second coating step, is performed from the left lower portion where the taping region 201 has been formed, to thereby manufacture an electrode.

### Comparative Example 1

The electrode was prepared in the same manner as in Example 1, except that the taping region was formed to a width in the range of 10% for the width direction of the non-coated part line.

### Comparative Example 2

The electrode was prepared in the same manner as in Example 1 except that the length of the taping region was 1% of the total length of the metal thin film for the current collector.

### Comparative Example 3

The electrodes were prepared in the same manner as in Example 1 except that taping was not performed.

The examples 1 and 2 and the comparative examples 1 to 3 can be summarized as the following table 1.

**[Table 1]**

| Division | Whether taping is performed (Y/N) | Width of taping region | Length of taping region |
|---|---|---|---|
| | | (compared to width direction) (%) | (compared to total length of metal thin film for current collector) (%) |
| Example 1 | Y (both surfaces) | 100 | 10 |
| Example 2 | Y (one surface) | 50 | 10 |
| Comparative Example 1 | Y (both surfaces) | 10 | 10 |
| Comparative Example 2 | Y (both surfaces) | 100 | 1 |
| Comparative Example 3 | N | - | - |

The result of observing whether the back coating succeeded in the examples 1 and 2 and comparative examples 1 to 3 with naked eyes was shown in Table 2 below.

**[Table 2]**

| Division | Whether back coating was successful |
|---|---|
| Example 1 | O |
| Example 2 | O |
| Comparative Example 1 | X |
| Comparative Example 2 | X |
| Comparative Example 3 | X |

In the electrode according to the example of the present invention, the back coating could be performed as the electrode curling phenomenon is prevented by the taping at the time of a back coating.

However, in the case of the comparative example, it was confirmed that as the electrode curling phenomenon occurred at the back coating start point after the top coating, the back coating was not appropriately performed.

That is, in the electrode according to the example of the present invention, the coating can be stably performed on both sides of the metal thin film as the electrode curling phenomenon is prevented at the time of the back coating after the top coating. On the other hand, the electrode according to the comparative example has a problem that the back coating is not properly performed due to the electrode curling phenomenon during the back coating after top coating.

Namely, the electrode manufactured through the present invention can resolve an electrode defect by preventing the manufactured electrode from being rolled, and then after removing a tape, a final electrode can be manufactured through a step of performing a cutting according to the size of the electrode.

In the above, the present invention has been described in more detail through the drawings and examples. Accordingly, the embodiments described in the specification and the configurations described in the drawings are only the most preferred embodiments of the present invention, and do not represent all of the technical ideas of the present invention.

### [Description of reference numerals]

100: metal thin film for current collector
101, 101(a), 101(b), 201: taping region
110: coated part
120: non-coated part
S10: first coating step
S20: first drying step
S30: second coating step
S40: second drying step

## Claims

1. A method for manufacturing an electrode, the method comprising:
a first coating step (S10) of forming a first electrode mixture layer on one surface of a metal thin film (100) for a current collector, which has a taping region (101) in which a tape is bonded;
a first drying step (S20) of drying the metal thin film where the first electrode mixture layer has been formed;
a second coating step (S30) of forming a second electrode mixture layer on an opposite surface of a surface where the first electrode mixture layer of the first dried metal thin film;
a second drying step (S40) of drying the metal thin film where the second electrode mixture layer has been formed, and
a tape removing step of removing the tape in the taping region,
wherein the metal thin film for the current collector includes the taping region formed at an opposite end of the coating start point, based on a coating direction in the first coating step.

2. The method of claim 1, wherein a width direction edge of the metal thin film (100) for the current collector is a non-coated part line where an electrode mixture layer has not been formed, and
wherein the taping region (101) is formed on the non-coated part line.

3. The method of claim 2, wherein the taping region (101) is formed on the non-coated part line and is formed in a range of 20 to 100 % in a width direction of the non-coated part line.

4. The method of claim 1, wherein the taping region (101) is formed in a coating direction by a certain distance from an end of the metal thin film (100) for the current collector and is formed along a non-coated part line of the metal thin film for the current collector, and
wherein a length of a portion where the taping region is formed corresponds to a 3 to 30 % of a total length of the metal thin film for the current collector.

5. The method of claim 1, wherein the taping region (101) is formed on one surface of the metal thin film (100) for the current collector.

6. The method of claim 1, wherein the taping region (101) is formed on both surfaces of the metal thin film (100) for the current collector.

7. The method of claim 1, wherein in the first coating step, the first electrode mixture layer is formed on one surface of the metal thin film (100) for the current collector from an end where the taping region (101) has not been formed, and
wherein in the second coating step, the second electrode mixture layer is formed on an other surface of the metal thin film for the current collector from an end where the taping region has been formed.

8. The method of claim 1, further comprising a step of cutting the metal thin film (100) for the current collector according to a size of the current collector after the second drying step (S40).

9. The method of claim 1, wherein the first coating step (S10) and the first drying step (S20) are simultaneously performed, and the second coating step (S30) and the second drying step (S40) are simultaneously performed.

10. The method of claim 1, wherein the metal thin film (100) for the current collector is made of copper or its alloy or aluminum or its alloy.

## Patentansprüche

1. Verfahren zur Herstellung einer Elektrode, wobei das Verfahren umfasst:
einen ersten Beschichtungsschritt (S10) zur Bildung einer ersten Elektrodenmischungsschicht auf einer Oberfläche eines Metalldünnfilms (100) für einen Stromkollektor, der einen Taping-Bereich (101) aufweist, in dem ein Klebeband angebracht wird;
einen ersten Trocknungsschritt (S20) zum Trocknen des Metalldünnfilms, wo die erste Elektrodenmischungsschicht gebildet worden ist;
einen zweiten Beschichtungsschritt (S30) zur Bildung einer zweiten Elektrodenmischungsschicht auf einer Oberfläche die gegenüber einer Oberfläche liegt, wo die erste Elektrodenmischungsschicht des ersten getrockneten Metalldünnfilms ist; und
einen zweiten Trocknungsschritt (S40) zum Trocknen des Metalldünnfilms, wo die zweite Elektrodenmischungsschicht gebildet worden ist, und
einen Klebeband-Entfernungsschritt zum Entfernen des Klebebandes in dem Taping-Bereich,
wobei der Metalldünnfilm für den Stromkollektor den Taping-Bereich aufweist, der an einem entgegengesetzten Ende des Beschichtungsstartpunkts ausgebildet wird, basierend auf einer Beschichtungsrichtung in dem ersten Beschichtungsschritt.

2. Verfahren nach Anspruch 1, wobei eine Kante in Breitenrichtung des Metalldünnfilms (100) für den Stromkollektor eine Linie des nicht beschichteten Teils ist, an der keine Elektrodenmischungsschicht gebildet worden ist, und
wobei der Taping-Bereich (101) auf der Linie des nicht beschichteten Teils gebildet wird.

3. Verfahren nach Anspruch 2, wobei der Taping-Bereich (101) auf der Linie des nicht beschichteten Teils ausgebildet wird und in einem Bereich von 20 bis 100 % in einer Breitenrichtung der Linie des nicht beschichteten Teils ausgebildet wird.

4. Verfahren nach Anspruch 1, wobei der Taping-Bereich (101) in einer Beschichtungsrichtung in einem bestimmten Abstand von einem Ende des Metalldünnfilms (100) für den Stromkollektor ausgebildet wird und entlang einer Linie des nicht beschichteten Teils des Metalldünnfilms für den Stromkollektor ausgebildet wird, und
wobei eine Länge eines Abschnitts, in dem der Taping-Bereich ausgebildet wird, 3 bis 30 % einer Gesamtlänge des Metalldünnfilms für den Stromkollektor entspricht.

5. Verfahren nach Anspruch 1, wobei der Taping-Bereich (101) auf einer Oberfläche des Metalldünnfilms (100) für den Stromkollektor ausgebildet wird.

6. Verfahren nach Anspruch 1, wobei der Taping-Bereich (101) auf beiden Oberflächen des Metalldünnfilms (100) für den Stromkollektor ausgebildet wird.

7. Verfahren nach Anspruch 1, wobei in dem ersten Beschichtungsschritt die erste Elektrodenmischungsschicht auf einer Oberfläche des Metalldünnfilms (100) für den Stromkollektor von einem Ende aus ausgebildet wird, an dem der Taping-Bereich (101) nicht gebildet worden ist, und
wobei in dem zweiten Beschichtungsschritt die zweite Elektrodenmischungsschicht auf einer anderen Oberfläche des Metalldünnfilms für den Stromkollektor von einem Ende aus ausgebildet wird, an dem der Taping-Bereich gebildet worden ist.

8. Verfahren nach Anspruch 1, ferner umfassend einen Schritt des Schneidens des Metalldünnfilms (100) für den Stromkollektor entsprechend einer Größe des Stromkollektors nach dem zweiten Trocknungsschritt (S40).

9. Verfahren nach Anspruch 1, wobei der erste Beschichtungsschritt (S10) und der erste Trocknungsschritt (S20) gleichzeitig durchgeführt werden, und der zweite Beschichtungsschritt (S30) und der zweite Trocknungsschritt (S40) gleichzeitig durchgeführt werden.

10. Verfahren nach Anspruch 1, wobei der Metalldünnfilm (10) für den Stromkollektor aus Kupfer oder einer Kupferlegierung oder aus Aluminium oder einer Aluminiumlegierung hergestellt ist.

## Revendications

1. Procédé de fabrication d'une électrode, le procédé comprenant :
une première étape de revêtement (S10) consistant à former une première couche de mélange d'électrode sur une surface d'un film métallique mince (100) pour un collecteur de courant, qui présente une région d'application de ruban (101) dans laquelle un ruban est collé ;
une première étape de séchage (S20) consistant à sécher le film métallique mince où la première couche de mélange d'électrode a été formée ;
une seconde étape de revêtement (S30) consistant à former une seconde couche de mélange d'électrode sur une surface opposée d'une surface où se trouve la première couche de mélange d'électrode du premier film métallique mince séché ;
une seconde étape de séchage (S40) consistant à sécher le film métallique mince où la seconde couche de mélange d'électrode a été formée, et
une étape de retrait de ruban consistant à retirer le ruban dans la région d'application de ruban,
dans lequel le film métallique mince pour le collecteur de courant comporte la région d'application de ruban formée au niveau d'une extrémité opposée du point de départ de revêtement, sur la base d'une direction de revêtement dans la première étape de revêtement.

2. Procédé selon la revendication 1, dans lequel un bord de direction de largeur du film métallique mince (100) pour le collecteur de courant est une ligne de partie non revêtue où une couche de mélange d'électrode n'a pas été formée, et
dans lequel la région d'application de ruban (101) est formée sur la ligne de partie non revêtue.

3. Procédé selon la revendication 2, dans lequel la région d'application de ruban (101) est formée sur la ligne de partie non revêtue et est formée dans une plage de 20 à 100 % dans une direction de largeur de la ligne de partie non revêtue.

4. Procédé selon la revendication 1, dans lequel la région d'application de ruban (101) est formée dans une direction de revêtement sur une certaine distance à partir d'une extrémité du film métallique mince (100) pour le collecteur de courant et est formée le long d'une ligne de partie non revêtue du film métallique mince pour le collecteur de courant, et
dans lequel une longueur d'une partie où la région d'application de ruban est formée correspond à 3 à 30 % d'une longueur totale du film métallique mince pour le collecteur de courant.

5. Procédé selon la revendication 1, dans lequel la région d'application de ruban (101) est formée sur une surface du film métallique mince (100) pour le collecteur de courant.

6. Procédé selon la revendication 1, dans lequel la région d'application de ruban (101) est formée sur les deux surfaces du film métallique mince (100) pour le collecteur de courant.

7. Procédé selon la revendication 1, dans lequel dans la première étape de revêtement, la première couche de mélange d'électrode est formée sur une surface du film métallique mince (100) pour le collecteur de courant à partir d'une extrémité où la région d'application de ruban (101) n'a pas été formée, et
dans lequel dans la seconde étape de revêtement, la seconde couche de mélange d'électrode est formée sur une autre surface du film métallique mince pour le collecteur de courant à partir d'une extrémité où la région d'application de ruban a été formée.

8. Procédé selon la revendication 1, comprenant en outre une étape de coupe du film métallique mince (100) pour le collecteur de courant selon une taille du collecteur de courant après la seconde étape de séchage (S40).

9. Procédé selon la revendication 1, dans lequel la première étape de revêtement (S10) et la première étape de séchage (S20) sont simultanément réalisées, et la seconde étape de revêtement (S30) et la seconde étape de séchage (S40) sont simultanément réalisées.

10. Procédé selon la revendication 1, dans lequel le film métallique mince (100) pour le collecteur de courant est composé de cuivre ou de son alliage ou d'aluminium ou de son alliage.
